# EUROPEAN PATENT APPLICATION

(11) **EP 4 364 977 A1**
(43) Date of publication of application: **08.05.2024**
(21) Application number: 21948481.3
(22) Date of filing: 02.11.2021
(51) Int. Cl.: B60C 15/00, B60C 15/06, B60C 19/00

(54) **TIRE**

(30) Priority: 30.06.2021 JP 2021109734
(71) Applicant: BRIDGESTONE CORPORATION, Chuo-ku Tokyo 104-8340 (JP)
(72) Inventor: SUMITOMO, Kenta, Tokyo 104-8340 (JP)
(74) Representative: Marks & Clerk LLP
(86) International application number: PCT/JP2021/040455
(87) International publication number: WO 2023/276178

(57) **Abstract**

A tire 1 including a pair of bead cores 5, and a carcass 6 formed by at least one carcass ply, which has a body portion 6a and turn-up portions 6b, the tire including: a first rubber member 10 arranged on an outer side in a tire radial direction of a bead core 5 in the pair of bead cores so that at least part of the first rubber member in the tire radial direction is sandwiched between the body portion 6a and a corresponding one of the turn-up portions 6b, wherein a height in the tire radial direction of the first rubber member 10 is 15 % or less of a tire cross-sectional height; and a high-hardness rubber member (11A, 11B) that has a higher hardness than side rubber 9 and that is arranged on an outer side in a tire width direction of the first rubber member 10, wherein a communication device 12 is embedded in a position in the tire radial direction that is located on an inner side in the tire radial direction of a tire maximum width position SWH and on the outer side in the tire radial direction of the high-hardness rubber member.

## Description

### TECHNICAL FIELD

The present disclosure relates to a tire.

This application claims priority to Japanese Patent Application No. 2021-109734 filed on June 30, 2021, the entire contents of which are incorporated herein by reference.

### BACKGROUND

Conventionally, tires can be configured to be embedded with communication devices, including sensors that detect internal tire states, such as air pressures of the tires, and RF tags that contain memory capable of storing unique identification information of the tires. For example, sensors as communication devices can be used to determine tire states during driving, and various types of tire information obtained from memory of RF tags as communication devices can be used for maintenance services or the like.

Patent Literature 1 describes a tire with an RFID tag arranged in a bead portion reinforced with a reinforcement ply, so that durability of the RFID tag is improved.

### CITATION LIST

### Patent Literature

PTL 1: JP 2020-185975 A

### SUMMARY

### (Technical Problem)

In the conventional technology, however, there is room for improvement in communication performance of such a communication device, mainly due to a rubber member disposed on an outer side in a tire width direction.

It would be helpful to provide a tire in which both communication performance and durability of a communication device are achieved.

### (Solution to Problem)

A tire according to the present disclosure is
a tire including a pair of bead cores, and a carcass formed by at least one carcass ply, which has a body portion extending continuously in a toroidal shape between the pair of bead cores, and turn-up portions extending continuously from the body portion and being curled and turned up around the bead cores from an inner side in a tire width direction to an outer side in the tire width direction, the tire including:
a first rubber member arranged on an outer side in a tire radial direction of a bead core in the pair of bead cores so that at least part of the first rubber member in the tire radial direction is sandwiched between the body portion and a corresponding one of the turn-up portions, wherein a height in the tire radial direction of the first rubber member is 15 % or less of a tire cross-sectional height; and
a high-hardness rubber member that has a higher hardness than side rubber and that is arranged on the outer side in the tire width direction of the first rubber member, wherein
a communication device is embedded in a position in the tire radial direction that is located on an inner side in the tire radial direction of a tire maximum width position and on the outer side in the tire radial direction of the high-hardness rubber member.

### (Advantageous Effect)

According to the present disclosure, a tire in which both communication performance and durability of a communication device are achieved can be provided.

### BRIEF DESCRIPTION OF THE DRAWINGS

In the accompanying drawings:
FIG. 1 is a cross-sectional view (half view) in a width direction of a tire according to a first embodiment of the present disclosure;
FIG. 2 is a perspective view of an RF tag as a communication device that is to be arranged in the tire according to the embodiment; and
FIG. 3 is a cross-sectional view (half view) in the width direction of a tire according to a second embodiment of the present disclosure.

### DETAILED DESCRIPTION

A tire according to the present disclosure can be used as any type of tire, but it can suitably be used as a tire for passenger vehicles.

In the following, embodiments of the tire according to the present disclosure will be illustrated with reference to the drawings. In the drawings, the same components are denoted with the same reference numerals.

### [First Embodiment]

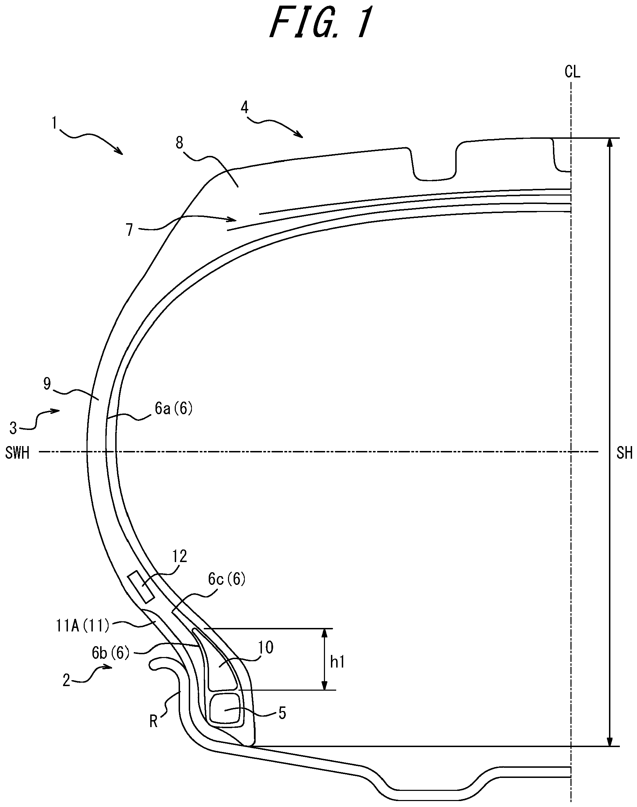

FIG. 1 is a cross-sectional view (half view) in a width direction of a tire 1 according to a first embodiment of the present disclosure. In FIG. 1, the tire 1 is depicted as being mounted on an applicable rim R.

Herein, the "applicable rim" refers to a standard rim (which is called a measuring rim in STANDARDS MANUAL of the European Tyre and Rim Technical Organisation [ETRTO], and a design rim in YEAR BOOK of the Tire and Rim Association, Inc. [TRA]) of an applicable size that is described or will be described in industrial standards valid for a region in which the tire is produced or used. Examples of the industrial standards include JATMA Year Book of the Japan Automobile Tyre Manufacturers Association (JATMA) in Japan, STANDARDS MANUAL of the ETRTO in Europe, and YEAR BOOK of the TRA in the United States of America (that is, the "rim" includes any size currently included and any size which will be possibly included in the industrial standards. Examples of the "size which will be described" include those described as "FUTURE DEVELOPMENTS" in the 2013 edition of STANDARDS MANUAL of the ETRTO). As for sizes not described in the industrial standards, the "rim" refers to a rim having a width corresponding to the bead width of the tire.

Moreover, a "predetermined internal pressure" refers to an air pressure (maximum air pressure) corresponding to the maximum load capability of a single wheel of an applicable size/ply rating specified in the aforementioned JATMA Year Book or the like. As for sizes not described in the industrial standards, the "predetermined internal pressure" refers to an air pressure (maximum air pressure) corresponding to the maximum load capability determined depending on a vehicle to which the tire is mounted.

Additionally, air herein can be replaced by inert gas, such as nitrogen gas, or another type of gas.

Herein, a "tire maximum width position" means a position in a tire radial direction at which the distance in the tire width direction between parts of a carcass that are located in a pair of sidewall portions is maximum.

Here, unless otherwise specified, the dimensions of elements, such as distances in the tire width direction, are measured in a later-described "reference state." The "reference state" refers to a state in which the tire is mounted on a rim, filled to the predetermined internal pressure, and subjected to no load.

Herein, the term "hardness of rubber" means a hardness measured in accordance with JIS K6253 using a Type A durometer (A-Type) at a room temperature of 23°C.

As illustrated in FIG. 1, the tire 1 according to the first embodiment of the present disclosure includes a pair of bead portions 2, a pair of sidewall portions 3, and a tread portion 4 extending between the two sidewall portions 3.

The tire 1 includes a pair of bead cores 5 embedded in the pair of bead portions 2, and a carcass 6. The carcass 6 is formed by at least one (in the present embodiment, one) carcass ply. The carcass ply has a body portion 6a extending continuously in a toroidal shape between the pair of bead cores 5, and turn-up portions 6b extending continuously from the body portion 6a and being curled and turned up around the bead cores 5 from an inner side in the tire width direction to an outer side in the tire width direction, and the carcass ply terminates at turn-up ends 6c. The carcass ply may be made of any material without particular limitation, but it may be formed by coating cords of steel, organic fiber, or the like with rubber.

In the tread portion 4, a belt 7 formed by a plurality of (in the present embodiment, two) belt layers, and tread rubber 8 are sequentially arranged on an outer side in the tire radial direction of a crown region of the carcass 6. In the sidewall portions 3, side rubber 9 is arranged on the outer side in the tire width direction of the carcass 6.

The tire 1 according to the present embodiment includes a first rubber member 10 arranged on the outer side in the tire radial direction of a bead core 5 so that at least part of the first rubber member 10 in the tire radial direction is sandwiched between the body portion 6a and a turn-up portion 6b of the carcass 6. The height h1 in the tire radial direction of the first rubber member 10 is 15% or less of a tire cross-sectional height SH.

Here, the "tire cross-sectional height" is defined as 1/2 of the difference between an outer diameter of the tire 1 and a rim diameter in the reference state in which the tire 1 is mounted on the rim R.

The tire 1 according to the present embodiment includes a high-hardness rubber member 11 arranged on the outer side in the tire width direction of the first rubber member 10. The high-hardness rubber member 11 is a rubber member that has a higher hardness than the side rubber 9.

The high-hardness rubber member 11 may have any configuration without particular limitation, but it can be, for example, a second rubber member 11A arranged so that at least part of it is in contact with the applicable rim R of the tire 1, as illustrated in FIG. 1.

In the tire 1 according to the present embodiment, a communication device 12 is embedded in a position in the tire radial direction that is located on an inner side in the tire radial direction of a tire maximum width position SWH and on the outer side in the radial direction of the high-hardness rubber member 11 (the second rubber member 11A in the present embodiment).

Here, the communication device 12 may have any configuration without particular limitation, as long as it is configured to wirelessly communicate with a predetermined device external to the tire 1. The communication device 12 can be, for example, an RF tag. The RF tag is also referred to as a Radio Frequency Identification (RFID) tag. The communication device 12 can be configured to include an IC chip 13 containing a controller and a memory, and one or more antennas 12a connected to the IC chip 13. For example, the communication device 12 may have an overall longitudinal shape in which two antennas extending in a straight, wavy, or helical shape are provided so as to extend in opposite directions from the IC chip 13.

Furthermore, the IC chip may be operated by induced electromotive force produced by electromagnetic waves received by one or more antennas. That is, the communication device 12 may be a passive communication device. Alternatively, the communication device 12 may further include a battery and may be capable of communicating by generating electromagnetic waves by its own power. That is, the communication device 12 may be an active communication device.

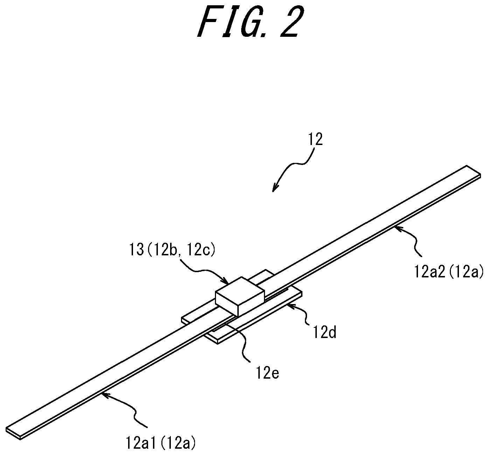

FIG. 2 is a perspective view of an RF tag as the communication device 12 that is to be arranged in the tire 1 according to the present embodiment. As illustrated in FIG. 2, the RF tag as the communication device 12 that is to be arranged in the tire 1 according to the present embodiment includes a first antenna 12a1 and a second antenna 12a2, which constitute an antenna 12a, and the IC chip 13 containing a controller 12b and a memory 12c, which are operated by induced electromotive force produced by electromagnetic waves received by the first antenna 12a1 and the second antenna 12a2, a plate-shaped support member 12d to which the IC chip 13 is attached, and an electrically-conductive conductive member 12e that electrically connects the IC chip 13 and each of the first antenna 12a1 and the second antenna 12a2.

Additionally, the communication device 12 may be coated with coating rubber.

Operational advantages of the configuration of the tire according to the present embodiment will be described.

By setting the height h1 in the tire radial direction of the first rubber member 10 to be 15% or less of the tire cross-sectional height SH, an excessive increase in rigidity of the bead portion 2 is prevented, so that the ride comfort of the tire 1 can be improved, and rolling resistance can be reduced, and moreover, the weight of the tire 1 can be reduced. Furthermore, by providing the high-hardness rubber member 11, which has a higher hardness than the side rubber 9, on the outer side in the tire width direction of the first rubber member 10, the vicinity of the bead portion 2 is reinforced from the outer side in the tire width direction, and a sufficient rigidity of the tire 1 can be maintained, and this can also ensure a sufficient durability of the communication device 12 embedded in the tire 1.

Here, one method of increasing the hardness of rubber is to increase the carbon content. Although rubber with an increased carbon content has a higher hardness, the dielectric constant also tends to increase, and this may be one of the factors that hinder communication performance. Accordingly, by embedding the communication device 12 while avoiding the position in the tire radial direction in which the high-hardness rubber member 11 (the second rubber member 11A in the present embodiment) is arranged, sufficient communication performance of the communication device 12 can be ensured.

Furthermore, there tend to be more metal members, such as the bead core 5 and the rim R, in the vicinity of the bead core 5, than on the outer side in the tire radial direction of the bead core 5, and this may affect the communication performance. In a case in which the gauge of the tread portion of the tire is reduced, it is possible to use a method of strengthening the vicinity of the bead core by increasing the thickness of rubber located in the vicinity and on the outer side in the width direction of the bead core, so as to maintain the rigidity of the tire, and this may also affect the communication performance. By avoiding such positions and arranging the communication device 12 in a position in the tire radial direction that is located on the inner side in the tire radial direction of the tire maximum width position SWH and on the outer side in the tire radial direction of the high-hardness rubber member 11, sufficient communication performance of the communication device 12 can be ensured.

Thus, according to the configuration of the tire 1 of the present embodiment, both the communication performance and the durability of the communication device can be achieved.

Components of the tire 1 according to the first embodiment and their suitable configuration or the like will be described below.

In the present embodiment, the first rubber member 10 is arranged on the inner side in the tire radial direction of the turn-up end 6c of the carcass 6, but it may be arranged so that an outer end in the tire radial direction of the first rubber member 10 is located on the outer side in the tire radial direction of the turn-up end 6c of the carcass 6. Preferably, the first rubber member 10 is arranged in an area surrounded by the body portion 6a of the carcass 6 and the turn-up portion 6b. Because the turn-up end 6c of the carcass ply extends beyond the outer end in the tire radial direction of the first rubber member 10 and because the first rubber member 10 is surrounded by the carcass ply, the rigidity in the vicinity of the bead portion 2 and in the sidewall portion 3 is increased, and a sufficient rigidity of the tire 1 can effectively be maintained, and this can also ensure a sufficient durability of the communication device 12 embedded in the tire 1.

In the present embodiment, the cross-sectional area S1 of the first rubber member 10 is preferably smaller than the cross-sectional area of the bead core 5.

According to the above configuration, an excessive increase in rigidity of the bead portion 2 is effectively prevented, so that the ride comfort of the tire 1 can be improved, and rolling resistance can be reduced, and moreover, the weight of the tire 1 can sufficiently be reduced.

Additionally, the minimum cross-sectional area S1 of the first rubber member 10 may be any value without particular limitation, and by treating coating rubber of the bead core 5 as the first rubber member 10 in the area sandwiched between the body portion 6a and the turn-up portion 6b of the carcass 6 on the outer side in the tire radial direction of the bead core 5, the cross-sectional area of the first rubber member 10 can be minimized. According to this configuration, the weight of the tire can be reduced, and the ride comfort can be enhanced.

Furthermore, the height h1 in the tire radial direction of the first rubber member 10 is preferably 20 mm or less. By setting the height h1 in the tire radial direction to be 20 mm or less, an excessive increase in rigidity of the bead portion 2 is effectively prevented, so that the ride comfort of the tire 1 can be improved, and rolling resistance can effectively be reduced, and moreover, the weight of the tire 1 can sufficiently be reduced.

Additionally, rubber of the first rubber member 10 may have any hardness without particular limitation. From the viewpoint of maintaining an appropriate rigidity of the bead portion 2, rubber with a higher hardness than the side rubber 9, rubber with the same level of hardness as the high-hardness rubber member 11 (the second rubber member 11A in the present embodiment), or the like may be used. Alternatively, from the viewpoint of enhancing the ride comfort of the tire and the effect of reducing rolling resistance, rubber with the same level of hardness as the side rubber 9 or rubber with a lower hardness than the side rubber 9 may also be used.

In the tire 1 according to the present embodiment, an outer end in the tire radial direction of the high-hardness rubber member 11 (the second rubber member 11A in the present embodiment) is preferably located on the outer side in the tire radial direction of the bead core 5 and the first rubber member 10.

According to the above configuration, the vicinity of the bead portion 2 and part of the sidewall portion 3 are reinforced from the outer side in the tire width direction, and a sufficient rigidity of the tire 1 can effectively be maintained, and this can also ensure a sufficient durability of the communication device 12 embedded in the tire 1.

More preferably, the outer end in the tire radial direction of the high-hardness rubber member 11 (the second rubber member 11A in the present embodiment) is located on the outer side in the tire radial direction of the bead portion 2.

There tend to be more metal members, such as the bead core 5 and the rim R, in the vicinity of the bead core 5, than in the sidewall portion 3, and this may affect the communication performance. Accordingly, extending the high-hardness rubber member 11 to the sidewall portion 3 can ensure that the communication device 12 is arranged on the outer side in the tire radial direction of the vicinity of the bead core 5, so that sufficient communication performance of the communication device 12 can be more effectively ensured.

In the tire 1 according to the present embodiment, the communication device 12 may be positioned anywhere in the tire radial direction, as long as it is arranged in a position in the tire radial direction that is located on the inner side in the tire radial direction of the tire maximum width position SWH and on the outer side in the tire radial direction of the high-hardness rubber member 11, but it is preferable not to arrange it in a position in the tire radial direction corresponding to that of the turn-up end 6c of the carcass 6.

According to the above configuration, the communication device 12 is prevented from being affected by distortion that occurs near the turn-up end 6c of the carcass 6 when the tire is loaded and rolls, and a sufficient durability of the communication device 12 can be more effectively ensured. Besides, it is possible to prevent the communication device 12 from becoming the cause of a failure near the turn-up end 6c of the carcass 6 and inducing a failure of a carcass ply end.

Furthermore, the communication device 12 is preferably arranged in the boundary position between the high-hardness rubber member 11 (the second rubber member 11A in the present embodiment) and the side rubber 9 that is in contact with the high-hardness rubber member 11 at the outer end in the tire radial direction.

The above configuration is preferable from the viewpoint of productivity, and it can more effectively ensure a sufficient durability of the communication device 12 by mitigating the effects of deformation of the carcass ply when the tire is loaded and rolls. Besides, the above configuration can prevent the metal members and the high-hardness rubber from affecting communication performance, thereby more effectively ensuring sufficient communication performance of the communication device 12.

The communication device 12 may be arranged in any orientation without particular limitation, but in a case in which the communication device 12 has a longitudinal shape as illustrated in FIG. 2, for example, the first antenna 12a1 and the second antenna 12a2 can be arranged so that their longitudinal direction extends along a tire circumferential direction. Here, "extending along the tire circumferential direction" encompasses a case in which the longitudinal direction of the antennas is parallel to the tire circumferential direction or a case in which it is slightly inclined with respect to the tire circumferential direction (for example, with an inclination angle of 5° or less with respect to the tire circumferential direction).

### [Second Embodiment]

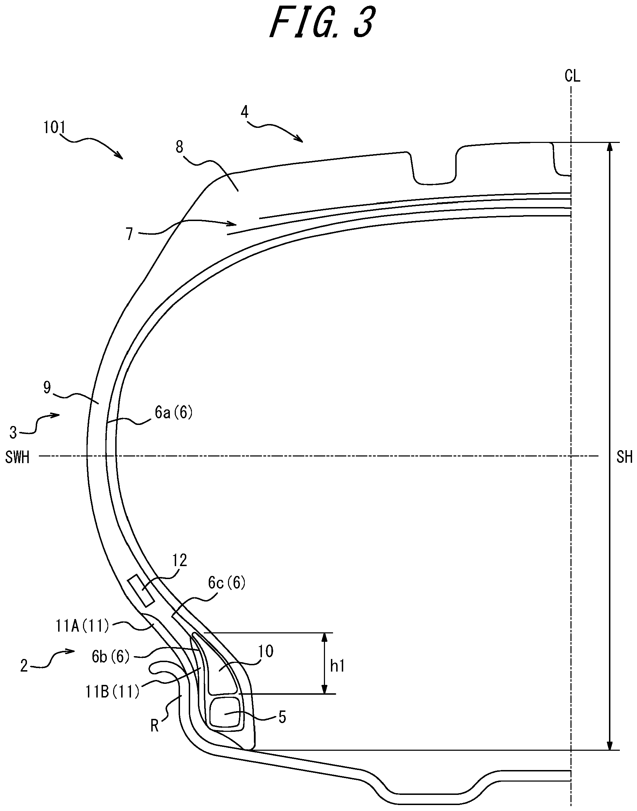

Next, a tire according to another embodiment (the second embodiment) of the present disclosure will be described with reference to FIG. 3. A tire 101 according to the second embodiment has the same configuration as the tire 1 according to the first embodiment, except that it has a third rubber member 11B. The same configuration as the first embodiment is denoted by the same reference numerals, and its description will be omitted.

FIG. 3 is a cross-sectional view (half view) in the width direction of the tire according to the second embodiment of the present disclosure. In FIG. 3, the tire 101 is depicted as being mounted on the applicable rim R.

In the tire 101 according to the second embodiment of the present disclosure, the high-hardness rubber member 11 includes a second rubber member 11A, which is arranged so that at least part of it is in contact with the applicable rim R of the tire 101, and a third rubber member 11B, which is arranged on the outer side in the tire width direction of the turn-up portion 6b of the carcass 6 and on the inner side in the tire width direction of the second rubber member 11A.

The third rubber member 11B is a rubber member having a higher hardness than the side rubber 9.

Additionally, in FIG. 3, an outer end in the tire radial direction of the third rubber member 11B is located on the inner side in the tire radial direction of the second rubber member 11A, but the outer end in the tire radial direction of the third rubber member 11B may be located on the outer side in the tire radial direction of the second rubber member 11A, and the second rubber member 11A and the outer end in the tire radial direction of the third rubber member 11B may have any positional relationship without particular limitation.

In the tire 101 according to the present embodiment, the communication device 12 is embedded in a position in the tire radial direction that is located on the outer side in the tire radial direction of the second rubber member 11A and the third rubber member.

Operational advantages of the configuration of the tire according to the present embodiment will be described.

By setting the height h1 in the tire radial direction of the first rubber member 10 to be 15% or less of the tire cross-sectional height SH, an excessive increase in rigidity of the bead portion 2 is prevented, so that the ride comfort of the tire 1 can be improved, and rolling resistance can be reduced, and moreover, the weight of the tire 1 can be reduced. Furthermore, by providing the high-hardness rubber member 11 (the second rubber member 11A and the third rubber member 11B in the present embodiment), which has a higher hardness than the side rubber 9, on the outer side in the tire width direction of the first rubber member 10, the vicinity of the bead portion 2 is reinforced from the outer side in the tire width direction, and a sufficient rigidity of the tire 1 can be maintained, and this can also ensure a sufficient durability of the communication device 12 embedded in the tire 1.

Here, one method of increasing the hardness of rubber is to increase the carbon content. Although rubber with an increased carbon content has a higher hardness, the dielectric constant also tends to increase, and this may be one of the factors that hinder communication performance. Accordingly, by embedding the communication device 12 while avoiding the position in the tire radial direction in which the high-hardness rubber member 11 (the second rubber member 11A and the third rubber member 11B in the present embodiment) is arranged, sufficient communication performance of the communication device 12 can be ensured.

Furthermore, there tend to be more metal members, such as the bead core 5 and the rim R, in the vicinity of the bead core 5, than on the outer side in the tire radial direction of the bead core 5, and this may affect the communication performance. In a case in which the gauge of the tread portion of the tire is reduced, it is possible to use a method of strengthening the vicinity of the bead core by increasing the thickness of rubber located in the vicinity and on the outer side in the width direction of the bead core, so as to maintain the rigidity of the tire, and this may also affect the communication performance. By avoiding such positions and arranging the communication device 12 in a position in the tire radial direction that is located on the inner side in the tire radial direction of the tire maximum width position SWH and on the outer side in the tire radial direction of the high-hardness rubber member 11, sufficient communication performance of the communication device 12 can be ensured.

Thus, according to the configuration of the tire 101 of the present embodiment, both the communication performance and the durability of the communication device can effectively be achieved.

Components of the tire 101 according to the second embodiment and their suitable configuration or the like will be described below.

In the present embodiment also, rubber of the first rubber member 10 may have any hardness without particular limitation. From the viewpoint of maintaining an appropriate rigidity of the bead portion 2, rubber with a higher hardness than the side rubber 9, rubber with the same level of hardness as the high-hardness rubber member 11 (the second rubber member 11A and the third rubber member 11B in the present embodiment), or the like may be used. Alternatively, from the viewpoint of enhancing the ride comfort of the tire and the effect of reducing rolling resistance, rubber with the same level of hardness as the side rubber 9 or rubber with a lower hardness than the side rubber 9 may also be used.

In the tire 1 according to the present embodiment, an outer end in the tire radial direction of one of the second rubber member 11A and the third rubber member 11B, which constitute the high-hardness rubber member 11, that is located further on the outer side in the tire radial direction is preferably located on the outer side in the tire radial direction of the bead core 5 and the first rubber member 10.

According to the above configuration, the vicinity of the bead portion 2 and part of the sidewall portion 3 are reinforced from the outer side in the tire width direction, and a sufficient rigidity of the tire 1 can effectively be maintained, and this can also ensure a sufficient durability of the communication device 12 embedded in the tire 1.

More preferably, the outer end in the tire radial direction of the one of the second rubber member 11A and the third rubber member 11B, which constitute the high-hardness rubber member 11, that is located further on the outer side in the tire radial direction is located on the outer side in the tire radial direction of the bead portion 2.

There tend to be more metal members, such as the bead core 5 and the rim R, in the vicinity of the bead core 5, than in the sidewall portion 3, and this may affect the communication performance. Accordingly, extending the high-hardness rubber member 11 to the sidewall portion 3 can ensure that the communication device 12 is arranged on the outer side in the tire radial direction of the vicinity of the bead core 5, so that sufficient communication performance of the communication device 12 can be more effectively ensured.

Furthermore, the communication device 12 is preferably arranged in the boundary position between the one of the second rubber member 11A and the third rubber member 11B, which constitute the high-hardness rubber member 11, that is located further on the outer side in the tire radial direction, and the side rubber 9 that is in contact with the high-hardness rubber member 11 located further on the outer side in the tire radial direction at the outer end in the tire radial direction.

The above configuration is preferable from the viewpoint of productivity, and it can more effectively ensure a sufficient durability of the communication device 12 by mitigating the effects of deformation of the carcass ply when the tire is loaded and rolls. Besides, the above configuration can prevent the metal members and the high-hardness rubber from affecting communication performance, thereby more effectively ensuring sufficient communication performance of the communication device 12.

A tire according to the present disclosure can be used as any type of tire, but it can suitably be used as a tire for passenger vehicles.

### REFERENCE SIGNS LIST

- 1, 101: Tire
- 2: Bead portion
- 3: Sidewall portion
- 4: Tread portion
- 5: Bead core
- 6: Carcass
- 6a: Body portion
- 6b: Turn-up portion
- 6c: Turn-up end
- 7: Belt
- 8: Tread rubber
- 9: Side rubber
- 10: First rubber member
- 11: High-hardness rubber member
- 11A: Second rubber member
- 11B: Third rubber member
- 12: Communication device
- 12a: Antenna
- 12a1: First antenna
- 12a2: Second antenna
- 12b: Controller
- 12c: Memory
- 12d: Support member
- 12e: Conductive member
- 13: IC chip
- SWH: Tire maximum width position

## Claims

1. A tire including a pair of bead cores, and a carcass formed by at least one carcass ply, which has a body portion extending continuously in a toroidal shape between the pair of bead cores, and turn-up portions extending continuously from the body portion and being curled and turned up around the bead cores from an inner side in a tire width direction to an outer side in the tire width direction, the tire comprising:
a first rubber member arranged on an outer side in a tire radial direction of a bead core in the pair of bead cores so that at least part of the first rubber member in the tire radial direction is sandwiched between the body portion and a corresponding one of the turn-up portions, wherein a height in the tire radial direction of the first rubber member is 15 % or less of a tire cross-sectional height; and
a high-hardness rubber member that has a higher hardness than side rubber and that is arranged on the outer side in the tire width direction of the first rubber member, wherein
a communication device is embedded in a position in the tire radial direction that is located on an inner side in the tire radial direction of a tire maximum width position and on the outer side in the tire radial direction of the high-hardness rubber member.

2. The tire according to claim 1, wherein
the high-hardness rubber member includes
a second rubber member arranged so that at least part of the second rubber member is in contact with an applicable rim of the tire, and
the communication device is embedded in a position in the tire radial direction that is located on the outer side in the tire radial direction of the second rubber member.

3. The tire according to claim 1, wherein
the high-hardness rubber member includes
a second rubber member arranged so that at least part of the second rubber member is in contact with an applicable rim of the tire, and a third rubber member arranged on the outer side in the tire width direction of the turn-up portion and on the inner side in the tire width direction of the second rubber member, wherein
the communication device is embedded in a position in the tire radial direction that is located on the outer side in the tire radial direction of the second rubber member and the third rubber member.

4. The tire according to any one of claims 1 to 3, wherein the communication device is not arranged in a position in the tire radial direction corresponding to a position of an end of the turn-up portion.

5. The tire according to any one of claims 1 to 4, wherein the communication device is an RF tag.
